# EUROPEAN PATENT APPLICATION

(11) **EP 4 804 211 A1**
(43) Date of publication of application: **09.09.2026**
(21) Application number: 25871681.0
(22) Date of filing: 09.09.2025
(51) Int. Cl.: H01B 1/06, H01B 1/10, H01M 10/052, H01M 10/0562

(54) **SULFIDE SOLID ELECTROLYTE**

(30) Priority: 30.09.2024 JP 2024171401
(71) Applicant: Murata Manufacturing Co., Ltd., Nagaokakyo-shi, Kyoto 617-8555 (JP)
(72) Inventor: MORINO, Yusuke, Nagaokakyo-shi, Kyoto 617-8555 (JP); TAKASE, Kentaro, Nagaokakyo-shi, Kyoto 617-8555 (JP); ITO, Daisuke, Nagaokakyo-shi, Kyoto 617-8555 (JP)
(74) Representative: Reddie & Grose LLP
(86) International application number: PCT/JP2025/031865
(87) International publication number: WO 2026/070362

(57) **Abstract**

The solid-state battery according to an embodiment of the present disclosure is provided with a sulfide solid electrolyte including at least Li, Sn, S, and O and having a tetragonal crystal structure.

## Description

### TECHNICAL FIELD

The present disclosure relates to a sulfide solid electrolyte.

### BACKGROUND ART

Conventionally, secondary batteries that can be repeatedly charged and discharged have been used for various applications. For example, secondary batteries are used as power sources of electronic devices such as smartphones and notebooks.

In a secondary battery, a liquid electrolyte is commonly used as a medium for ion transfer that contributes to charging and discharging. More specifically, a so-called electrolytic solution is used for the secondary battery. However, generally, in such a secondary battery, safety is required in terms of preventing leakage of the electrolytic solution. In addition, an organic solvent and the like for use in the electrolytic solution are flammable substances, and thus safety is required in that respect as well.

Therefore, a solid-state battery using a solid electrolyte instead of the electrolytic solution has been studied.

### PRIOR ART DOCUMENT

### NON-PATENT DOCUMENT

Non-Patent Document 1: K. Kanazawa, et al., Inorg. Chem., 2018, 57, 9925-9930.

### SUMMARY OF THE INVENTION

### Problem to be solved by the invention

Herein, as the solid electrolyte, a sulfide solid electrolyte having excellent ion conductivity and roomtemperature formability may be used. However, the sulfide solid electrolyte can react with moisture to generate harmful hydrogen sulfide, and thus a sulfide solid electrolyte having excellent water resistance is required.

In this regard, as the sulfide solid electrolyte excellent in water resistance, a Li-Sn-S (LSS)-based solid electrolyte has attracted attention. However, as compared with a conventionally known Li-P-S (LPS)-based solid electrolyte, LSS is partially reductively decomposed at a low potential of approximately 1.0 V, exhibiting low reduction resistance. Therefore, the Li metal plating and stripping efficiency is considerably low, and it may be difficult to use a combination of a negative electrode active material and LSS that are typically used in a solid-state battery.

The present disclosure has been made in view of such problems. That is, an object of the present disclosure is to provide a sulfide solid electrolyte capable of improving reduction resistance.

### Means for solving the problem

In order to achieve the above object, the solid-state battery according to an embodiment of the present disclosure is provided with a sulfide solid electrolyte including at least Li, Sn, S, and O and having a tetragonal crystal structure.

### Advantageous effect of the invention

The sulfide solid electrolyte according to an embodiment of the present disclosure can improve reduction resistance.

### BRIEF EXPLANATION OF DRAWINGS

FIG. 1 is a sectional view schematically illustrating a solid-state battery including a sulfide solid electrolyte according to an embodiment of the present disclosure.
FIG. 2 is a sectional view schematically illustrating a solid-state battery including a sulfide solid electrolyte according to an embodiment of the present disclosure.
FIG. 3 is a sectional view schematically illustrating a solid-state battery including a sulfide solid electrolyte according to an embodiment of the present disclosure.
FIG. 4A is a graph showing a plating-stripping curve in Comparative Example 1.
FIG. 4B is a graph showing a plating-stripping curve in Example 1.

### MODE FOR CARRYING OUT THE INVENTION

Hereinafter, the solid-state battery of the present disclosure will be described in detail. Although the description will be made with reference to the drawings as necessary, the illustrated contents are only schematically and exemplarily illustrated for the understanding of the present disclosure, and the appearance, the dimensional ratio, or the like may be different from the actual ones.

The "sectional view" as used in the present description is based on a form (briefly, a form in the case of being cut along a plane parallel to the layer thickness direction) viewed from a direction substantially perpendicular to the stacking direction in the laminate structure of the solid-state battery. In addition, the "plan view" or "plan view shape" used in the present description is based on a sketch drawing when an object is viewed from an upper side or a lower side in the layer thickness direction (that is, the stacking direction mentioned above).

The "vertical direction" and "horizontal direction" used directly or indirectly in the present description correspond to a vertical direction and a horizontal direction in the drawings, respectively. Unless otherwise specified, the same reference signs or symbols shall denote the same members or sites or the same meanings. In a preferred aspect, it can be understood that the downward direction in the vertical direction (that is, the direction in which gravity acts) corresponds to a "downward direction", and the opposite direction corresponds to an "upward direction".

The "solid-state battery" in the present disclosure refers to, in a broad sense, a battery with the constituent elements consisting of solid and refers to, in a narrow sense, an all-solid-state battery with the constituent elements (particularly preferably all constituent elements) consisting of solid. In a preferred aspect, the solid-state battery of the present disclosure is a stacked solid-state battery configured such that layers constituting a battery constituent unit are stacked on each other. The "solid-state battery" includes not only a primary battery but also a so-called "secondary battery" that can be repeatedly charged and discharged. The "secondary battery" is not excessively restricted by its name, which can encompass, for example, a power storage device and the like. Hereinafter, a solid-state battery that is a secondary battery will be taken as an example, and a specific configuration of the solid-state battery will be described.

A feature of the present disclosure relates to a positive electrode portion and a solid electrolyte portion included in a solid-state battery. Hereinafter, in order to grasp the overall structure of the solid-state battery, the basic configuration of the solid-state battery according to the present disclosure will be first described. However, the configuration of the solid-state battery described herein is merely an example for understanding the invention, and not considered limiting the invention.

### [Basic configuration of solid-state battery]

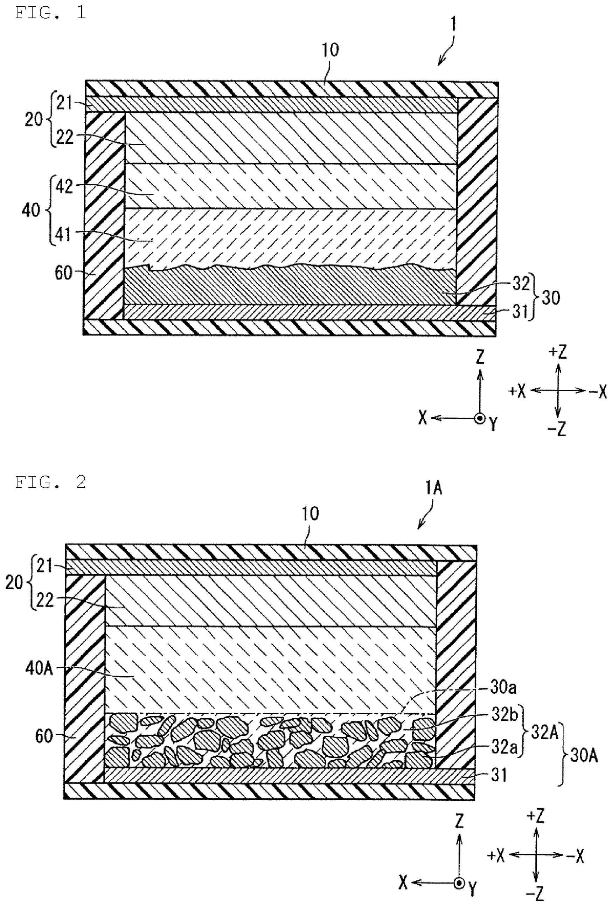

FIG. 1 is a sectional view schematically illustrating a solid-state battery including a sulfide solid electrolyte according to an embodiment of the present disclosure. This figure is a sectional view schematically illustrating the solid-state battery according to an embodiment of the present invention. The solid-state battery has at least electrode portions of a positive electrode portion and a negative electrode portion, and a solid electrolyte portion. Specifically, as illustrated in FIG. 1, the solid-state battery 1 includes a battery constituent unit consisting of a positive electrode portion 20, a negative electrode portion 30, and a solid electrolyte portion 40 interposed at least therebetween.

The solid-state battery 1 according to the present invention includes at least one battery constituent unit consisting of the positive electrode portion 20, the negative electrode portion 30, and the solid electrolyte portion 40 interposed therebetween along a stacking direction Z. The positive electrode portion 20 and the negative electrode portion 30 are alternately stacked with the solid electrolyte portion 40 interposed therebetween.

The positive electrode portion 20 includes at least a positive electrode active material layer 22. The positive electrode portion may further include a solid electrolyte. Meanwhile, the negative electrode portion 30 includes at least a negative electrode active material layer 32. The negative electrode portion 30 may further include a solid electrolyte. The positive electrode portion 20 and the negative electrode portion 30 each having such a configuration can also be referred to as a "composite positive electrode body" and a "composite negative electrode body", respectively.

The positive electrode active material and the negative electrode active material are substances involved in the transfer of electrons in the solid-state battery. Ions move (conduct) between the positive electrode portion and the negative electrode portion through the solid electrolyte, and electrons are transferred, whereby charging and discharging are performed. The active materials of the positive electrode portion and the negative electrode portion are particularly preferably capable of occluding and releasing lithium ions. More specifically, the solid-state battery is preferably an all-solid state secondary battery configured to be charged and discharged by the movement of lithium ions between the positive electrode portion 20 and the negative electrode portion 30 through the solid electrolyte.

Examples of the positive electrode active material included in the positive electrode portion 20 include at least one selected from the group consisting of lithium-containing phosphate compounds that have a NASICON-type structure, lithium-containing phosphate compounds that have an olivine-type structure, lithium-containing layered oxides, and lithium-containing oxides that have a spinel-type structure.

Examples of the lithium-containing phosphate compound having a NASICON-type structure include Li₃V₂(PO₄)₃. Examples of the lithium-containing phosphate compounds that have an olivine-type structure include Li₃Fe₂(PO₄)₃, LiFePO₄, and/or LiMnPO₄. Examples of the lithium-containing layered oxides include LiCoO₂ and/or LiCo_{1/3}Ni_{1/3}Mn_{1/3}O₂. Examples of the lithium-containing oxides that have a spinel-type structure include LiMn₂O₄ and/or LiNi_{0.5}Mn_{1.5}O₄. The types of the lithium compound are not particularly limited, and may be, for example, a lithium-transition metal composite oxide and a lithium-transition metal phosphate compound. The lithium-transition metal composite oxide is a generic term for oxides containing lithium and one or two or more types of transition metal elements as constituent elements, and the lithium-transition metal phosphate compound is a generic term for phosphate compounds containing lithium and one or two or more types of transition metal elements as constituent elements. The type of the transition metal element is not particularly limited, and examples thereof include cobalt (Co), nickel (Ni), manganese (Mn), and iron (Fe).

In addition, the positive electrode active material may be, for example, an oxide, a disulfide, a chalcogenide, a conductive polymer, or the like. The oxide may be, for example, a titanium oxide, a vanadium oxide, a manganese dioxide, or the like. The disulfide is, for example, a titanium disulfide, a molybdenum sulfide, or the like. The chalcogenide may be, for example, a niobium selenide or the like. The conductive polymer may be, for example, a disulfide, a polypyrrole, a polyaniline, a polythiophene, a poly-para-styrene, a polyacetylene, a polyacene, or the like.

### (Negative electrode active material)

Examples of the negative electrode active material included in the negative electrode portion include at least one selected from the group consisting of oxides containing at least one element selected from the group consisting of titanium (Ti), silicon (Si), tin (Sn), chromium (Cr), iron (Fe), niobium (Nb), and molybdenum (Mo), carbon materials such as graphite, graphite-lithium compounds, lithium alloys, lithium-containing phosphate compounds that have a NASICON-type structure, lithium-containing phosphate compounds that have an olivine-type structure, and lithium-containing oxides that have a spinel-type structure. Examples of the lithium alloy include Li-Al. Examples of the lithium-containing phosphate compound having a NASICON structure include Li₃V₂(PO₄)₃ and/or LiTi₂(PO₄)₃. Examples of the lithium-containing phosphate compound having an olivine structure include Li₃Fe₂(PO₄)₃ and/or LiCuPO₄. Examples of the lithium-containing oxides that have a spinel-type structure include Li₄Ti₅O₁₂.

Further, in the solid-state battery 1, the positive electrode portion 20 and the negative electrode portion 30 may be made of the same material, or may be made of materials different from each other.

The thicknesses of the positive electrode portion 20 and negative electrode portion 30 are not particularly limited, and may be, independently of each other, for example, 2 µm or more and 50 µm or less, particularly 5 µm or more and 30 µm or less.

### (Positive electrode current collector layer/negative electrode current collector layer)

Although not an essential element for the electrode portion, the positive electrode portion 20 and the negative electrode portion 30 may include a positive electrode current collector 21 and a negative electrode current collector 31, respectively. The positive electrode current collector 21 and the negative electrode current collector 31 may each have the form of a foil. A part of each of the positive electrode current collector 21 and the negative electrode current collector 31 may be exposed to the outside of the solid-state battery 1. For example, each of the positive electrode current collector 21 and the negative electrode current collector 31 may have an electrical connection portion for electrical connection with the outside. In one embodiment, the solid-state battery may further include an end surface electrode (not illustrated) provided on the end surface of the stacked body of the positive electrode portion, the negative electrode portion, and the solid electrolyte portion and electrically connected to each of the positive electrode current collector 21 and the negative electrode current collector 31.

As described above, in the solid-state battery, the positive electrode current collector 21 and the negative electrode current collector 31 are not essential, and a solid-state battery provided without such a positive electrode current collector 21 and a negative electrode current collector 31 is also conceivable. That is, the solid-state battery of the present disclosure may be a so-called current collector-less solid-state battery.

### (Solid electrolyte portion)

The solid electrolyte portion 40 includes a solid electrolyte capable of conducting ions contributing to charge and discharge, such as lithium ions or sodium ions. In particular, the solid electrolyte portion 40 constituting a battery constituent unit in the solid-state battery 1 may form a layer through which lithium ions can conduct between the positive electrode portion 20 and the negative electrode portion 30. The solid electrolyte portion 40 may be provided at least between the positive electrode portion 20 and the negative electrode portion 30. That is, the solid electrolyte portion 40 may be present around the positive electrode portion 20 and/or the negative electrode portion 30 so as to extend beyond the region between the positive electrode portion 20 and the negative electrode portion 30.

The thickness of the solid electrolyte portion 40 is not particularly limited. The thickness of the solid electrolyte portion 40 located between the positive electrode portion 20 and the negative electrode portion 30 may be, for example, 1 µm or more and 15 µm or less, particularly 1 µm or more and 5 µm or less.

The outer surface of the solid-state battery 1 may be covered with the protective layer 10. The protective layer 10 is a layer provided to physically and chemically protect the solid-state battery 1. The protective layer 10 may be provided so as to overlap the stacked body of the positive electrode portion 20, the negative electrode portion 30, and the solid electrolyte portion 40 in plan view. That is, as illustrated in FIG. 1, the protective layer 10 may be provided on both sides of the solid-state battery 1 in the stacking direction Z of the electrode portion and the solid electrolyte portion. The material of the protective layer 10 is not particularly limited as long as it is an insulator, and may be, for example, resin, glass, or ceramics.

The solid-state battery 1 may further include a reinforcing portion 60 provided on side surfaces facing each other in a direction intersecting the stacking direction Z. The reinforcing portion 60 may contribute to prevention of a short circuit of the solid-state battery 1. The reinforcing portion 60 is not particularly limited as long as it is an insulator, and may be, for example, resin, glass, or ceramics.

### [Feature of present disclosure]

The present disclosure has a feature of a solid electrolyte that is a constituent element of the solid-state battery. The present disclosure has a feature in that a sulfide solid electrolyte, particularly a Li-Sn-S (LSS)-based solid electrolyte may be used as the solid electrolyte.

In the present disclosure, the sulfide solid electrolyte includes at least Li (lithium), Sn (tin), S (sulfur), and O (oxygen), and the crystal structure thereof is tetragonal. That is, the sulfide solid electrolyte of the present disclosure further includes O (oxygen) as compared with the conventional Li-Sn-S (LSS)-based solid electrolyte, and further the main crystal structure thereof is specified as tetragonal.

With such a feature, it is possible to suppress reductive decomposition at a high potential of approximately 1.0 V and to improve reduction resistance while securing water resistance of the LSS-based solid electrolyte. This makes it possible to suitably ensure the Li metal plating and stripping efficiency, and to suitably charge and discharge the solid-state battery.

Specifically, the sulfide solid electrolyte of the present disclosure is represented by the formula Li-M-Y-O.

In the formula, M includes at least Sn, is one or more elements selected from Groups 14 and 15, and Y includes at least S. Further, the content of O in the above formula is more than 0.1 mol and less than 1.5 mol.

More specifically, the sulfide solid electrolyte of the present disclosure is represented by the formula Lix-M-Yy-Oz. In the formula, M includes at least Sn, is one or more elements selected from Groups 14 and 15, and Y includes at least S. In addition, in the formula, 3 < x ≤ 4, y + z ≤ 4, and 0.1 < z < 1.5 can be satisfied.

Preferably, in the above formula, 0.3 ≤ z ≤ 1.0 can be satisfied. In this case, the efficiency of Li plating and stripping can be suitably ensured by several tens%, and the solid-state battery can be suitably charged and discharged.

More preferably, M in the above formula further includes Si or Sb. In this case, the efficiency of Li plating and stripping can be improved, and the solid-state battery can be more suitably charged and discharged.

In one example, as illustrated in Fig. 1 described above, the solid electrolyte portion 40 includes a "first solid electrolyte portion 42" having a solid electrolyte formed between the positive electrode portion 20 and the negative electrode portion 30, and a "second solid electrolyte portion 41" interposed between the first solid electrolyte portions 42 and the negative electrode portion 30 and in contact with the first solid electrolyte portion 42 and the negative electrode portion 30. In addition, the "second solid electrolyte portion 41" includes the sulfide solid electrolyte of the present disclosure described above.

With such a feature, it is possible to suppress reductive decomposition at a high potential of approximately 1.0 V and to improve reduction resistance while securing water resistance of the LSS-based solid electrolyte. This makes it possible to suitably ensure the Li metal plating and stripping efficiency. In addition, from the viewpoint of further improving the plating and stripping efficiency, it is preferable that the "first solid electrolyte portion 42" also includes the sulfide solid electrolyte of the present disclosure.

In another example, as illustrated in Fig. 2, the negative electrode active material layer 32A of the negative electrode portion 30A may include a particulate negative electrode active material 32a and a sulfide solid electrolyte 32b of the present disclosure. In this case, it is also possible to suppress reductive decomposition at a high potential of approximately 1.0 V and to improve reduction resistance while securing water resistance of the LSS-based solid electrolyte. This makes it possible to suitably ensure the Li metal plating and stripping efficiency.

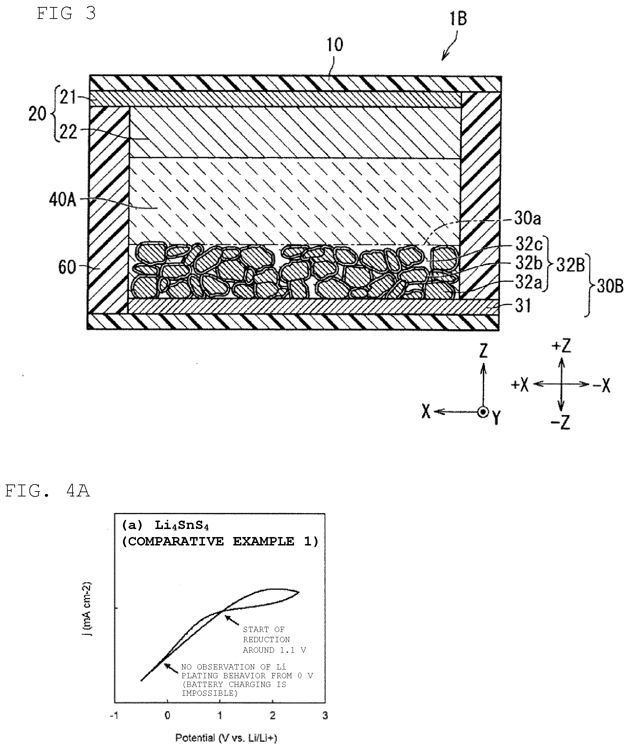

In still another example, as illustrated in Fig. 3, the negative electrode active material layer 32B of the negative electrode portion 30B can include a particulate negative electrode active material 32a, a sulfide solid electrolyte 32b of the present disclosure coating the surface thereof, and a first solid electrolyte 32c. In this case, it is also possible to suppress reductive decomposition at a high potential of approximately 1.0 V and to improve reduction resistance while securing water resistance of the LSS-based solid electrolyte. This makes it possible to suitably ensure the Li metal plating and stripping efficiency.

The average charging potential of the negative electrode active material is preferably 1.0 V vs Li+/Li or less. Thus, the output voltage of the battery can be increased. When the sulfide solid electrolyte of the present disclosure is not used, the average charging potential of the negative electrode active material is lower than the potential at which Li4SnS4 is reduced when the average charging potential is 1.0 V vs Li+/Li or less, and thus the solid electrolyte in contact with the negative electrode active material is decomposed and the discharge characteristics are deteriorated.

In this regard, the solid electrolyte in contact with the negative electrode active material is set as the solid electrolyte of the present disclosure, thereby allowing the discharge characteristics to be improved while suppressing reduction of the solid electrolyte in contact with the negative electrode active material, even when the average charging potential of the negative electrode active material is 1.0 V vs Li+/Li or less.

The average charging potential of the negative electrode active material refers to an average of negative electrode potentials in a charge curve obtained in a charge test for a half cell to which the negative electrode active material to be measured is applied. A charging measurement is performed on the half cell under, for example, the following conditions, and the average value of the potentials of the negative electrode from the start of charging to the end of charging in the obtained charging curve can be measured as the average charging potential of the negative electrode active material.
Charge rate: 0.1 C
Charging method: CC
End-of-charge voltage: 0.03 V

The negative electrode active material layer 32 may be at least one selected from the group consisting of carbon (C), tin (Sn), silicon (Si), and Li (lithium) metal as a negative electrode active material. In this case, the average charging potential of the negative electrode active material can be set to 1.0 V vs Li+/Li or less, and the discharge characteristics can be improved.

In addition, from the viewpoint of suppressing reduction of the solid electrolyte in contact with the negative electrode active material, it is preferable that the sulfide solid electrolyte of the present disclosure is contactable with the negative electrode active material.

### EXAMPLES

Examples of the present disclosure will be described below.

### (Fabrication of sulfide solid electrolyte)

First, in an atmosphere having a dew point temperature of -60 degrees or less, raw material reagents Li₂S (213241 (model number) manufactured by Sigma-Aldrich Co. LLC), Li₂O (374725 (model number) manufactured by Sigma-Aldrich Co. LLC), Sn (SNE06PB (model number) manufactured by Kojundo Chemical Laboratory Co., Ltd.), X, and S (manufactured by FUJIFILM Wako Pure Chemical Corporation, 195-04625 (model number)) were weighed so as to have a predetermined molar ratio. Then, H₂O was injected such that the solute concentration was 10 wt% relative to the total amount (g). Thereafter, the mixture was heated and stirred at 80°C for 24 hours. Elemental powder was used for each of Si (SIE23PB (model number) manufactured by Kojundo Chemical Laboratory Co., Ltd.) and Sb (013-19222 (model number) manufactured by FUJIFILM Wako Pure Chemical Corporation).
- Example 1: Li₂S : Li₂O : Sn : S = 1.7 : 0.3 : 1 : 2
- Example 2: Li₂S : Li₂O : Sn : S = 1.5 : 0.5 : 1 : 2
- Example 3: Li₂S : Li₂O : Sn : S = 1 : 1 : 1 : 2
- Example 4: Li₂S : Li₂O : Sn : Si : S = 1.7 : 0.3 : 0.9 : 0.1 : 2
- Example 5: Li₂S : Li₂O : Sn : Sb : S = 1.65 : 0.3 : 0.9 : 0.1 : 2
- Comparative Example 1: Li₂S : Sn : S = 2 : 1 : 2
- Comparative Example 2: Li₂S : Li₂O : Sn : S = 1.9 : 0.1 : 1 : 2
- Comparative Example 3: Li₂S : Li₂O : Sn : S = 0.5 : 1.5 : 1 : 2

The obtained mixed solution was vacuum-dried at 120°C to obtain a precursor powder of a solid electrolyte. Thereafter, the obtained powder was heated to 200°C at a heating rate of 10°C/min in an inert gas, and heat-treated for 3 hours to obtain each sulfide solid electrolyte powder.

### (Evaluation of Li plating and stripping)

First, 60 mg of Li₃PS₄ powder was compacted at 1 tf/(cm²·min) in a zirconia cylinder of 10mmφ to be pelletized. Further, 20 mg of the obtained sulfide solid electrolyte was introduced and compacted at 3 tf/(cm²·min) to pellet two layers.

Then, Li metal of 8mmφ was introduced into the Li₃PS₄ side of the prepared two-layer pellet, and a SUS (Stainless Used Steel) foil of 10mmφ was introduced into the obtained solid electrolyte side, and the two-layer pellet was restrained in a sealed container at 0.5 tf/(cm²·min).

Then, the efficiency of the Li plating and stripping was evaluated by forming a two-electrode cell having a working electrode on the SUS foil side and a counter electrode on the Li foil side, and sweeping from an open circuit voltage to -0.5 V and then sweeping to +2.5 V. For determination whether Li plating and stripping are possible and efficiency calculation, the presence or absence of a plating-stripping curve was determined on the basis of the definition of Scientific Reports, 3 (2013) 1401., and the efficiency was calculated from the amount of charge in cyclic voltammetry.

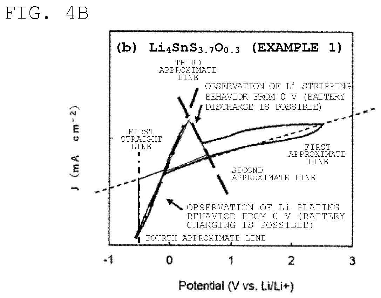

FIG. 4A is a graph showing a plating-stripping curve in Comparative Example 1. FIG. 4B is a graph showing a plating-stripping curve in Example 1. In Comparative Example 1, as shown in FIG. 4A, in the curve, in the process of sweeping from the open circuit voltage to -0.5 V, the reduction reaction of the battery started at around 1.1 V, and the Li plating from 0 V was not observed. That is, the battery cannot be charged.

In contrast, in Example 1, as shown in FIG. 4B, in the curve, in the process of sweeping from the open circuit voltage to -0.5 V, the behavior of the reduction reaction of the battery was not observed, and the plating behavior of Li from 0 V was observed. That is, the battery was in a suitably chargeable state.

Thereafter, the current gradually increased in the process of sweeping to +2.5 V and then decreased, and a "hump"-like curve was observed from around 0 V on the graph. The occurrence of such a "hump-like" curve allowed determination of a stripping behavior of Li.

As shown in FIG. 4B, for the plating curve formed in the process of sweeping from the open circuit voltage to around 0 V, a first approximate line (corresponding to a dotted straight line in the graph) is drawn so as to pass through the plating curve at 0 V. In addition, a second approximate line is drawn on the high-voltage side curve forming the hump-like curve so as to pass through the vertex of the hump-like curve in the stripping curve formed in the process of sweeping from -0.5 V to around +2.5 V, and a third approximate line is drawn on the low-voltage side curve forming the hump-like curve so as to pass through the stripping curve at 0 V. The area of the figure formed by the first, second, and third approximate lines in this manner was defined as a first calculated area.

Subsequently, a fourth approximate line is drawn by the least squares method for both the plating curve formed in the process of sweeping from 0 V to around -0.5 V and the stripping curve formed in sweeping from -0.5 to around 0 V so as to pass through the intersection of the plating-stripping curves at -0.5 V. In addition, a first straight line parallel to the Y axis of the graph is drawn so as to pass through -0.05 V that is the minimum voltage of the sweep range. As described above, the figure formed by the first and fourth approximate lines and the first straight line is defined as the second calculated area.

Then, the ratio between the first calculated area and the area that is twice the second calculated area was calculated as the plating-stripping efficiency.

As a result, in Example 1, a ratio of 42% was calculated. Although not shown, the ratio in Examples 2 to 5 was calculated in the same manner.

In contrast, in Comparative Example 1, a hump-like curve was not formed in the stripping curve in the process of sweeping to +2.5 V, and thus the ratio could not be calculated. In Comparative Examples 2 and 3, the above ratio was calculated by the same method as in Comparative Example 1, but a hump-like curve was not formed as in Comparative Example 1, and thus the ratio could not be calculated.

The measurement results are shown in Table 1 below.

**[Table 1]**

| | Plating and stripping of Li | Li plating-stripping efficiency | Crystal structure (obtained from XRD) |
|---|---|---|---|
| (Example 1) Li₄SnS_{3.7}O_{0.3} | ○ | 42% | Tetragonal crystal (P4/mmm) |
| (Example 2) Li₄SnS_{3.5}O_{0.5} | ○ | 39% | Tetragonal crystal (P4/mmm) |
| (Example 3) Li₄SnS_{3.0}O_{1.0} | ○ | 38% | Tetragonal crystal (P4/mmm) |
| (Example 4) Li₄Sn_{0.9}Si_{0.1}S_{3.7}O_{0.3} | ○ | 44% | Tetragonal crystal (P4/mmm) |
| (Example 5) Li_{3.9}Sn_{0.9}Sb_{0.1}S_{3.7}O_{0.3} | ○ | 44% | Tetragonal crystal (P4/mmm) |
| (Comparative Example 1) Li₄SnS₄ | × | - | Hexagonal (P6₃/mmc) |
| | (No Li plating-stripping behavior) | | |
| (Comparative Example 2) Li₄SnS_{3.9}O_{0.1} | × | - | Mixed crystal of hexagonal crystal (P6₃/mmc) + tetragonal crystal (P4/mmm) |
| | (No Li plating-stripping behavior) | | |
| (Comparative Example 3) Li₄SnS_{2.5}O_{1.5} | × | - | Mixed crystal of hexagonal crystal (P6₃/mmc) + tetragonal crystal (P4/mmm) |
| | No Li plating-stripping behavior | | |

From Table 1, the following items have been found.
- Comparison between Comparative Example 1 and Examples 1 to 5 showed that when O (oxygen) was further included as compared with the Li-Sn-S (LSS)-based solid electrolyte, and the main crystal structure thereof was tetragonal, reductive decomposition at a potential as low as approximately 1.0 V was suppressed, and Li plating behavior from 0 V and Li stripping behavior from 0 V were able to be confirmed.
- When the content of O in the obtained solid electrolyte was more than 0.1 mol and less than 1.5 mol, specifically, 0.3 mol or more and 1.0 mol or less, the Li plating behavior from 0 V and the Li stripping behavior from 0 V could be confirmed.
- It has been found that when the obtained solid electrolyte further includes Si or Sb, the efficiencies of Li plating and stripping can be enhanced as compared with the case of not including Si or Sb.

While the embodiment of the present invention has been described above, a typical example has been merely illustrated. Accordingly, the present invention is not limited to the embodiment, and those skilled in the art will readily understand that various aspects are conceivable without changing the spirit of the present invention.

One embodiment of the present invention as described above includes the following preferred aspects.
<1> A sulfide solid electrolyte, including
   at least Li, Sn, S, and O and
   having a tetragonal crystal structure.
<2> The sulfide solid electrolyte according to <1>, wherein
   the sulfide solid electrolyte is represented by a formula of Li-M-Y-O,
   wherein M includes at least Sn and is one or more elements selected from Groups 14 and 15, and Y includes at least S, and
   a content of O is more than 0.1 mol and less than 1.5 mol.
<3> The sulfide solid electrolyte according to <1> or <2>, wherein
   the sulfide solid electrolyte is represented by a formula of Lix-M-Yy-Oz,
   wherein M includes at least Sn and is one or more elements selected from Groups 14 and 15, and Y includes at least S,
   wherein 3 < x ≤ 4, y + z ≤ 4, and 0.1 < z < 1.5.
<4> The sulfide solid electrolyte according to <3>, wherein 0.3 ≤ z ≤ 1.0.
<5> The sulfide solid electrolyte according to <2> or <3>, wherein M further includes Si or Sb.
<6> A solid-state battery, including:
   a positive electrode portion having a positive electrode active material;
   a negative electrode portion having a negative electrode active material; and
   a first solid electrolyte portion having a solid electrolyte formed between the positive electrode portion and the negative electrode portion,
   further including a second solid electrolyte portion interposed between the first solid electrolyte portion and the negative electrode portion in a thickness direction and in contact with each of the first solid electrolyte portion and the negative electrode portion,
   wherein the second solid electrolyte portion includes the sulfide solid electrolyte according to any one of <1> to <5>.
<7> The solid-state battery according to <6>, wherein the first solid electrolyte portion includes the sulfide solid electrolyte according to claim 1.
<8> A solid-state battery, including:
   a positive electrode portion having a positive electrode active material;
   a negative electrode portion having a negative electrode active material; and
   a solid electrolyte portion having a solid electrolyte formed between the positive electrode portion and the negative electrode portion,
   wherein the negative electrode portion includes the particulate negative electrode active material and the sulfide solid electrolyte according to any one of <1> to <5>.
<9> A solid-state battery, including:
   a positive electrode portion having a positive electrode active material;
   a negative electrode portion having a negative electrode active material; and
   a solid electrolyte portion having a solid electrolyte formed between the positive electrode portion and the negative electrode portion,
   wherein the particulate negative electrode active material is covered with the sulfide solid electrolyte according to any one of <1> to <5>.
<10> The solid-state battery according to any one of <6> to <9>, wherein an average charging potential of the negative electrode active material is 1.0 V vs Li⁺/Li or less.
<11> The solid-state battery according to any one of <6> to <10>, wherein the negative electrode active material is at least one selected from the group consisting of C, Si, Sn, and Li.
<12> The solid-state battery according to any one of <6> to <11>, wherein
   the negative electrode portion further includes a negative electrode current collector, and
   the sulfide solid electrolyte according to claim 1 is contactable with the negative electrode active material or the negative electrode current collector.

### INDUSTRIAL APPLICABILITY

The solid-state battery according to the present invention can be used in various fields in which electricity storage is expected. Although the followings are merely examples, the solid-state battery of the present invention can be used in electricity, information and communication fields where mobile equipment and the like are used (e.g., electrical/electronic equipment fields or mobile device fields including mobile phones, smart phones, laptop computers, digital cameras, activity meters, arm computers, electronic papers, and small electronic devices such as RFID tags, card type electronic money, and smartwatches), domestic and small industrial applications (e.g., the fields such as electric tools, golf carts, domestic robots, caregiving robots, and industrial robots), large industrial applications (e.g., the fields such as forklifts, elevators, and harbor cranes), transportation system fields (e.g., the fields such as hybrid vehicles, electric vehicles, buses, trains, electric assisted bicycles, and two-wheeled electric vehicles), electric power system applications (e.g., the fields such as various power generation systems, load conditioners, smart grids, and home-installation type power storage systems), medical applications (medical equipment fields such as earphone hearing aids), pharmaceutical applications (the fields such as dose management systems), IoT fields, and space and deep sea applications (e.g., the fields such as spacecraft and research submarines).

### DESCRIPTION OF REFERENCE SYMBOLS

1, 1A to 1B: Battery
10: Protective layer
20: Positive electrode portion
21: Positive electrode current collector
22: Positive electrode active material
22a: Positive electrode active material particle
30: Negative electrode portion
31: Negative electrode current collector
32: Negative electrode active material layer
40, 40A: Solid electrolyte portion
41: First solid electrolyte portion
42: Second solid electrolyte portion
60: Reinforcing portion

## Claims

1. A sulfide solid electrolyte, comprising:
at least Li, Sn, S, and O; and
a tetragonal crystal structure.

2. The sulfide solid electrolyte according to claim 1, wherein
the sulfide solid electrolyte is represented by a formula of Li-M-Y-O,
wherein M includes at least Sn and is one or more elements selected from Groups 14 and 15, and Y includes at least S, and
a content of O is more than 0.1 mol and less than 1.5 mol.

3. The sulfide solid electrolyte according to claim 1, wherein
the sulfide solid electrolyte is represented by a formula of Lix-M-Yy-Oz,
wherein M includes at least Sn and is one or more elements selected from Groups 14 and 15, and Y includes at least S,
wherein 3 < x ≤ 4, y + z ≤ 4, and 0.1 < z < 1.5.

4. The sulfide solid electrolyte according to claim 3, wherein 0.3 ≤ z ≤ 1.0.

5. The sulfide solid electrolyte according to claim 2 or 3, wherein M further comprises Si or Sb.

6. A solid-state battery, comprising:
a positive electrode portion having a positive electrode active material;
a negative electrode portion having a negative electrode active material; and
a first solid electrolyte portion having a solid electrolyte formed between the positive electrode portion and the negative electrode portion,
further comprising a second solid electrolyte portion interposed between the first solid electrolyte portion and the negative electrode portion in a thickness direction and in contact with each of the first solid electrolyte portion and the negative electrode portion,
wherein the second solid electrolyte portion includes the sulfide solid electrolyte according to claim 1.

7. The solid-state battery according to claim 6, wherein the first solid electrolyte portion comprises the sulfide solid electrolyte according to claim 1.

8. A solid-state battery, comprising:
a positive electrode portion having a positive electrode active material;
a negative electrode portion having a negative electrode active material; and
a solid electrolyte portion having a solid electrolyte formed between the positive electrode portion and the negative electrode portion,
wherein the negative electrode portion includes the particulate negative electrode active material and the sulfide solid electrolyte according to claim 1.

9. A solid-state battery, comprising:
a positive electrode portion having a positive electrode active material;
a negative electrode portion having a negative electrode active material; and
a solid electrolyte portion having a solid electrolyte formed between the positive electrode portion and the negative electrode portion,
wherein the particulate negative electrode active material is covered with the sulfide solid electrolyte according to claim 1.

10. The solid-state battery according to any one of claims 6 to 9, wherein an average charging potential of the negative electrode active material is 1.0 V vs Li⁺/Li or less.

11. The solid-state battery according to claim 10, wherein the negative electrode active material is at least one selected from the group consisting of C, Si, Sn, and Li.

12. The solid-state battery according to any one of claims 6 to 9, wherein
the negative electrode portion further includes a negative electrode current collector, and
the sulfide solid electrolyte according to claim 1 is contactable with the negative electrode active material or the negative electrode current collector.
